# EUROPEAN PATENT APPLICATION

(11) **EP 4 610 064 A1**
(43) Date of publication of application: **03.09.2025**
(21) Application number: 22963519.8
(22) Date of filing: 28.10.2022
(51) Int. Cl.: B60C 23/04, B60C 23/06

(54) **STRAIN DETECTION DEVICE**

(71) Applicant: Astemo, Ltd., Tokyo 100-0004 (JP)
(72) Inventor: ABE Hiroyuki, Hitachinaka-shi, Ibaraki 312-8503 (JP); TAKAHASHI Tsukasa, Hitachinaka-shi, Ibaraki 312-8503 (JP)
(74) Representative: MERH-IP Matias Erny Reichl Hoffmann Patentanwälte PartG mbB
(86) International application number: PCT/JP2022/040338
(87) International publication number: WO 2024/089872

(57) **Abstract**

A cover of a housing of a strain detection device includes a peripheral wall portion having a cylindrical shape, a top plate portion that has a disc shape and closes an upper end of the peripheral wall portion, and a reinforcing portion provided protruding from the top plate portion. A volume of the cover is 15% or more and less than 40% of a volume of a cylinder including an upper surface of the top plate portion, an outer peripheral surface of the peripheral wall portion, and a bottom surface of the peripheral wall portion. In the strain detection device, a maximum deformation amount of the top plate portion of the cover in a central axis direction of the peripheral wall portion due to a differential pressure between an internal pressure of an internal space of a case sealed by the cover and an air pressure of a tire is **4.1% or** less of an outer diameter of the cover.

## Description

### Technical Field

The present disclosure relates to a strain detection device.

### Background Art

Conventionally, an invention related to a functional component attachable to a tire has been known (see PTL 1 below). This conventional functional component includes a configuration including strain detection means (strain sensor) for detecting strain of a tire on a bottom surface (PTL 1, Claim 6, paragraph [0043], and FIG. 10).

The conventional functional component includes a housing, and the housing includes an accommodation case having a module accommodation space (accommodation portion) and a cap functioning as a lid for the accommodation case (PTL 1, paragraphs [0010] to [0011], and FIG. 2). A hole penetrating through a circular ceiling portion of the cap is formed in the ceiling portion, and the hole enables communication between the accommodation space of the accommodation case and the outside when the opening of the accommodation case is closed by the cap (PTL 1, paragraph [0016], and FIG. 2).

### Citation List

### Patent Literature

PTL 1: JP 2020-055402 A

### Summary of Invention

### Technical Problem

A housing of a strain detection device that is bonded to an inner surface of a tire on a side opposite to a ground contact surface via an elastic adhesive and detects strain of the tire includes, for example, a case that accommodates a circuit board, a battery, and the like, and a cover that closes an opening portion of the case. Therefore, as in the functional component in PTL 1 above, when a hole is formed in the cover of the housing, an air pressure of the tire may act on the circuit board and the battery inside the case of the housing, or moisture and dust may enter the inside of the case, which may cause a problem in the strain detection device.

However, when the hole of the cover of the housing is closed to make the housing have a sealed structure, a uniformly distributed load acts on the cover due to a difference between the internal pressure of the housing and the air pressure of the tire. When the cover deforms due to the uniformly distributed load, stress caused by the deformation of the cover acts on the elastic adhesive between the strain sensor that detects the strain of the tire and the tire, and a detection error may occur in the strain sensor. However, when the deformation is prevented by increasing the thickness of the cover, the weight of the housing including the cover is increased, and thus the performance and practicality of the device may be deteriorated, for example, the centrifugal force and the inertial force acting on the strain detection device may be increased, and it may be difficult to adjust the alignment of the tire.

The present disclosure provides a strain detection device capable of improving strain detection accuracy of a tire by suppressing deformation of a cover of a housing having a sealed structure in which a circuit board and a battery are accommodated while suppressing an increase in weight of the housing including a case and the cover.

### Solution to Problem

According to an aspect of the present disclosure, a strain detection device includes a case fixed to an inner peripheral surface of a tire via an elastic adhesive, a strain sensor that is attached to an outer side of a bottom wall of the case and detects strain of the tire via the elastic adhesive, a circuit board and a battery that are accommodated in an internal space of the case, and a cover that is made of resin, closes an opening portion of the case on a side opposite to the bottom wall of the case and seals the internal space, in which the cover includes a peripheral wall portion having a cylindrical shape, a top plate portion that has a disc shape and closes an upper end of the peripheral wall portion, and a reinforcing portion provided protruding from the top plate portion, a volume of the cover is 15% or more and less than 40% of a volume of a cylinder including an upper surface of the top plate portion, an outer peripheral surface of the peripheral wall portion, and a bottom surface of the peripheral wall portion, and a maximum deformation amount of the top plate portion of the cover in a central axis direction of the peripheral wall portion due to a differential pressure between an internal pressure of the internal space of the case sealed by the cover and an air pressure of the tire is 4.1% or less of an outer diameter of the cover.

### Advantageous Effects of Invention

According to the above aspect of the present disclosure, it is possible to provide a tire strain detection device capable of improving strain detection accuracy of a tire by suppressing deformation of a cover of a housing having a sealed structure in which a circuit board and a battery are accommodated while suppressing an increase in weight of the housing including a case and the cover.

### Brief Description of Drawings

[FIG. 1] FIG. 1 is an enlarged cross-sectional view illustrating an embodiment of a strain detection device according to the present disclosure.
[FIG. 2] FIG. 2 is a bottom view and a cross-sectional view of a cover of a housing in the strain detection device of FIG. 1.
[FIG. 3] FIG. 3 is a bottom view and a cross-sectional view illustrating Modification Example 1 of the cover of FIG. 2.
[FIG. 4] FIG. 4 is a bottom view and a cross-sectional view illustrating Modification Example 2 of the cover of FIG. 2.
[FIG. 5] FIG. 5 is a bottom view and a cross-sectional view illustrating Modification Example 3 of the cover of FIG. 2.
[FIG. 6] FIG. 6 is a bottom view and a cross-sectional view illustrating Modification Example 4 of the cover of FIG. 2.
[FIG. 7] FIG. 7 is a bottom view and a cross-sectional view illustrating Modification Example 5 of the cover of FIG. 2.
[FIG. 8] FIG. 8 is a graph showing a relationship between stress acting on the cover in FIGS. 2 to 7 and a volume ratio.
[FIG. 9] FIG. 9 is a graph showing a relationship between an outer diameter of the cover in FIGS. 2 to 7 and a maximum deformation amount.
[FIG. 10] FIG. 10 is a top view illustrating a modification example of a case of the housing in the strain detection device of FIG. 1.

### Description of Embodiments

Hereinafter, an embodiment of a strain detection device according to the present disclosure will be described with reference to the drawings.

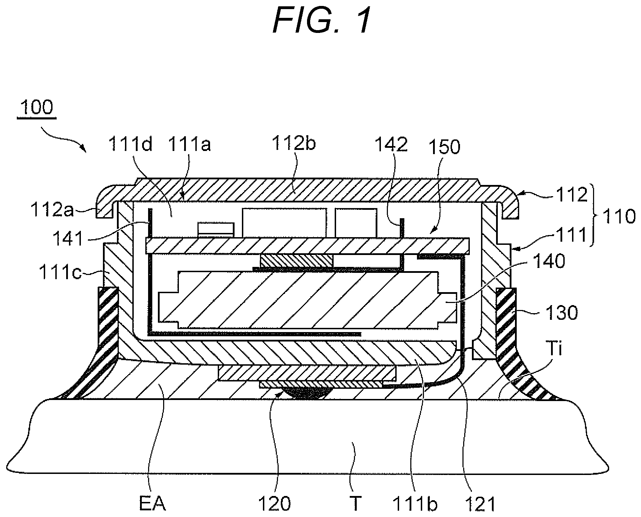

FIG. 1 is an enlarged cross-sectional view illustrating an embodiment of the strain detection device according to the present disclosure. A strain detection device 100 in the present embodiment is attached to, for example, an inner peripheral surface Ti of a tire T of a vehicle such as an automobile, detects strain of the tire T, and transmits a detection result to the outside of the device by wireless communication. The detection result of the strain transmitted from the strain detection device 100 is received by an external device such as an electronic control unit (ECU) via a communication device mounted on the vehicle, for example.

The strain detection device 100 includes, for example, a housing 110, a strain sensor 120, an elastic member 130, a battery 140, and a circuit board 150. The housing 110 includes, for example, a case 111 that has a bottomed cylindrical shape and is made of resin and a cover 112 that is made of resin and closes an opening portion 111a of the case 111. As the resin material of the case 111 and the cover 112, for example, polybutylene terephthalate (PBT), polyamide (PA), polycarbonate (PC), or the like having a dielectric constant of less than 4 and a dielectric loss tangent of less than 0.02 can be used from a viewpoint of enabling wireless communication.

The case 111 includes, for example, a cylindrical portion 111c having a circular opening portion 111a at an upper end, and a bottom wall 111b that closes a lower end of the cylindrical portion 111c. In the case 111, for example, the elastic member 130 having a skirt shape is attached to a lower end portion of the cylindrical portion 111c, and the case 111 is fixed to the inner peripheral surface Ti of the tire T via an elastic adhesive EA filled inside the elastic member 130.

The cover 112 is fixed to the upper end of the cylindrical portion 111c of the case 111 by, for example, an adhesive, and closes the opening portion 111a on the side opposite to the bottom wall 111b of the case 111 to seal an internal space 111d of the case 111. The cover 112 includes a peripheral wall portion 112a having a cylindrical shape and a top plate portion 112b that has a disc shape and closes an upper end of the peripheral wall portion 112a.

The strain sensor 120 is attached to the outside of the bottom wall 111b of the case 111 of the housing 110 and detects strain of the tire T via the elastic adhesive EA. The strain sensor 120 includes, for example, a semiconductor sensor. The semiconductor sensor uses a piezoresistive effect of diffusion resistance formed by ion-implanting impurities into a silicon single crystal, and can detect strain of the tire T by directly measuring a voltage from an electrode pad of a semiconductor chip. The strain sensor 120 is connected to the circuit board 150 via, for example, a wiring 121.

A lower portion of the case 111 is inserted inside the cylindrical upper portion of the elastic member 130, and the elastic member 130 is fixed to the outer peripheral surface of the lower portion of the case 111. The elastic member 130 has a skirt-shaped lower portion whose diameter is increased as it goes downward from the cylindrical upper portion. The elastic member 130 is produced by, for example, an elastic resin material such as rubber, and elastically deforms following deformation of the tire T.

The battery 140 is, for example, a button-type battery. The battery 140 is accommodated in the internal space 111d of the case 111 from the opening portion 111a of the case 111 of the housing 110, and is disposed on the bottom wall 111b of the case 111. The battery 140 is connected to the circuit board 150 via connection terminals 141 and 142, for example, and supplies electric power to the circuit board 150.

The circuit board 150 is accommodated, for example, in the internal space 111d of the case 111 from the opening portion 111a of the case 111. The circuit board 150 is supported by a step or a protrusion on the inner peripheral surface of the case 111, and is disposed over the battery 140. The circuit board 150 includes, for example, a power supply circuit, a signal processing circuit, a wireless communication circuit, and a control circuit. The power supply circuit supplies, for example, electric power supplied from the battery 140 to the strain sensor 120. The signal processing circuit processes, for example, a signal input from the strain sensor 120. The wireless communication circuit transmits, for example, a detection result of the strain of the tire T by the strain sensor 120 to an external device by wireless communication. The control circuit controls, for example, the power supply circuit, the signal processing circuit, and the wireless communication circuit.

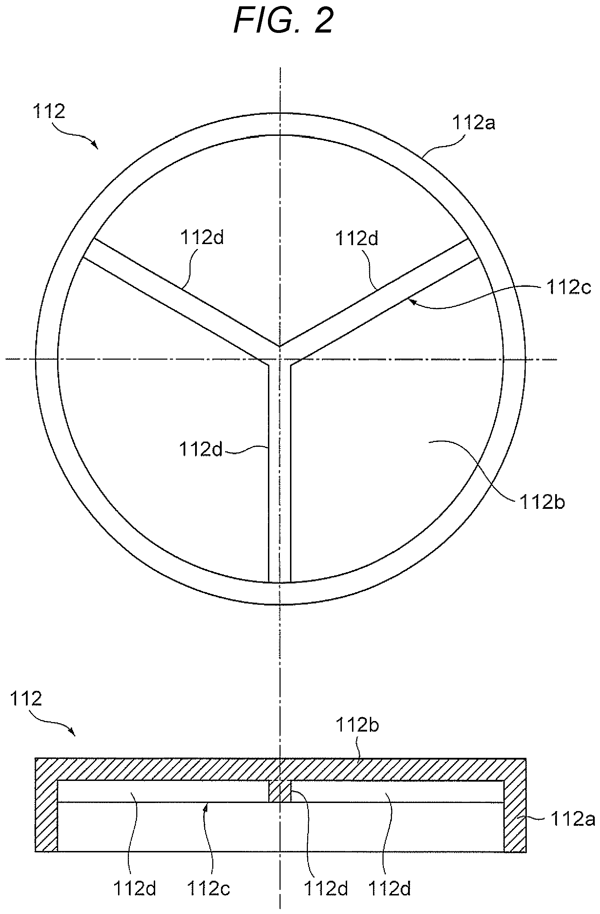

The upper view and the lower view of FIG. 2 are a bottom view and a cross-sectional view of the cover 112 of the housing 110 in the strain detection device 100 of FIG. 1, respectively. The strain detection device 100 in the present embodiment has the following configuration. The cover 112 includes the peripheral wall portion 112a having a cylindrical shape, the top plate portion 112b that has a disc shape and closes the upper end of the peripheral wall portion 112a, and a reinforcing portion 112c provided protruding from the top plate portion 112b.

The volume of the cover 112 is 15% or more and less than 40% of the volume of a cylinder or a column including the upper surface of the top plate portion 112b, the outer peripheral surface of the peripheral wall portion 112a, and the lower surface of the peripheral wall portion 112a. In addition, the cover 112 is provided such that the maximum deformation amount of the top plate portion 112b of the cover 112 in the central axis direction of the peripheral wall portion 112a due to the differential pressure between the internal pressure of the internal space 111d of the case 111 sealed by the cover 112 and the air pressure of the tire T is 4.1% or less of the outer diameter of the cover 112.

Here, the air pressure of the tire T is, for example, about 14 [atm] at the maximum in a case of a commercial tire, whereas the internal pressure of the internal space 111d of the case 111 sealed by the cover 112 is, for example, about 1 [atm]. Due to the differential pressure between the air pressure of the tire T and the internal pressure of the internal space 111d of the case 111, a uniformly distributed load acts on the upper surface of the top plate portion 112b of the cover 112.

As described above, in the strain detection device 100 in the present embodiment, the reinforcing portion 112c is provided in the cover 112, and the percentage of the volume of the cover 112 with respect to the volume of the cylinder or the column defined by the upper surface, the outer peripheral surface, and the bottom surface of the cover 112 having the peripheral wall portion 112a and the top plate portion 112b is defined. Further, the strain detection device 100 in the present embodiment defines the percentage of the maximum deformation amount of the cover 112 due to the uniformly distributed load with respect to the outer diameter of the cover 112.

FIG. 2 illustrates an example of the configuration of the cover 112 satisfying these conditions. In the example illustrated in FIG. 2, the reinforcing portion 112c includes a plurality of ribs 112d extending in a radial direction from the central portion of the lower surface of the top plate portion 112b toward the outer edge portion. The cover 112 includes, for example, three or more ribs 112d arranged at equal angular intervals in a circumferential direction of the cover 112 after satisfying the conditions of the volume and the maximum deformation amount of the cover 112. In the example illustrated in FIG. 2, the protruding height of each rib 112d, that is, the height from the bottom surface of the top plate portion 112b to the tip of the rib 112d in a protruding direction of the rib 112d is uniform.

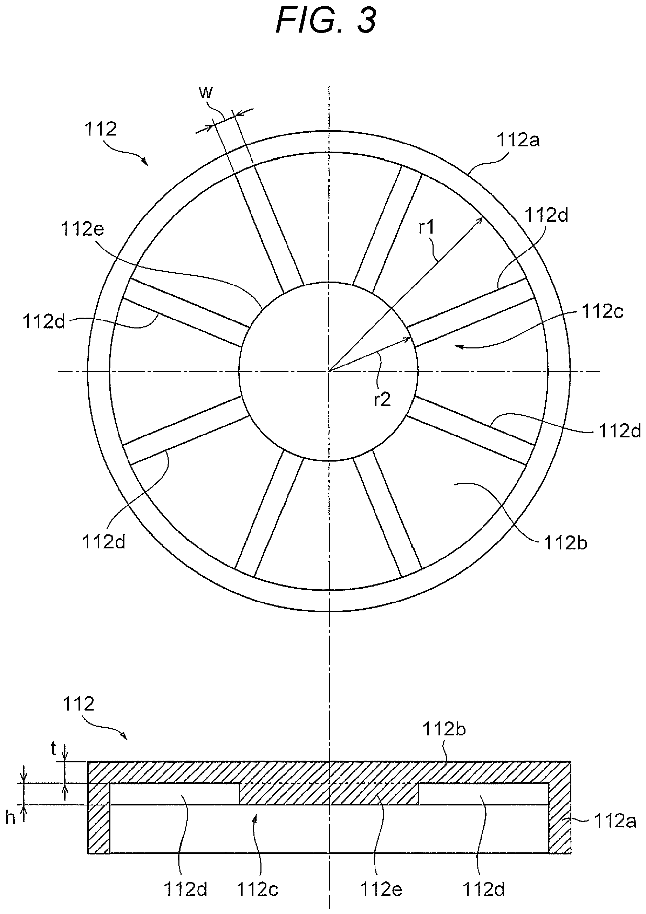

The upper view and the lower view of FIG. 3 are a bottom view and a cross-sectional view, respectively, illustrating Modification Example 1 of the cover 112 of FIG. 2. In the cover 112 illustrated in FIG. 3, for example, the reinforcing portion 112c includes a plurality of ribs 112d and a columnar projection 112e after satisfying the conditions of the volume and the maximum deformation amount. The columnar projection 112e is provided on the lower surface of the top plate portion 112b and is a thick portion having a short axis columnar shape concentric with the peripheral wall portion 112a.

In the cover 112 illustrated in FIG. 3, for example, the width w of the rib 112d, the thickness t of the top plate portion 112b, and the protruding height h of the rib 112d are equal (w=t=h). In addition, the radius r2 of the columnar projection 112e is, for example, 1/2 or more of the radius r1 of the cover 112 (r2 ≥ 1/2×r1). These conditions are, for example, optimum conditions for suppressing deformation of the cover 112 obtained by computer-aided engineering (CAE).

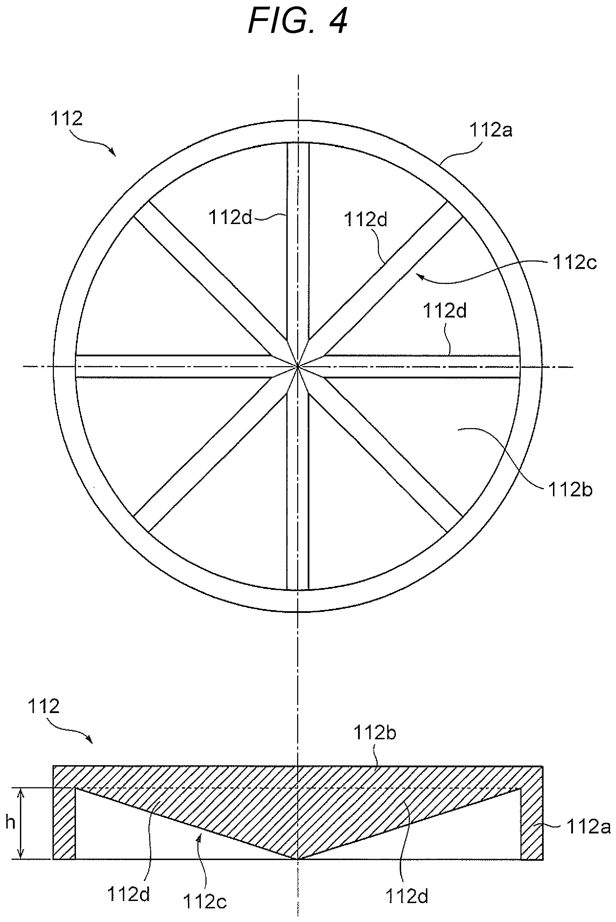

The upper view and the lower view of FIG. 4 are a bottom view and a cross-sectional view, respectively, illustrating Modification Example 2 of the cover 112 of FIG. 2. For example, the reinforcing portion 112c includes a plurality of ribs 112d arranged at equal angular intervals in the circumferential direction of the cover 112 after the cover 112 illustrated in FIG. 4 satisfies the conditions of the volume and the maximum deformation amount. Further, the protruding height h of each rib 112d gradually decreases from the center of the top plate portion 112b toward the outer edge.

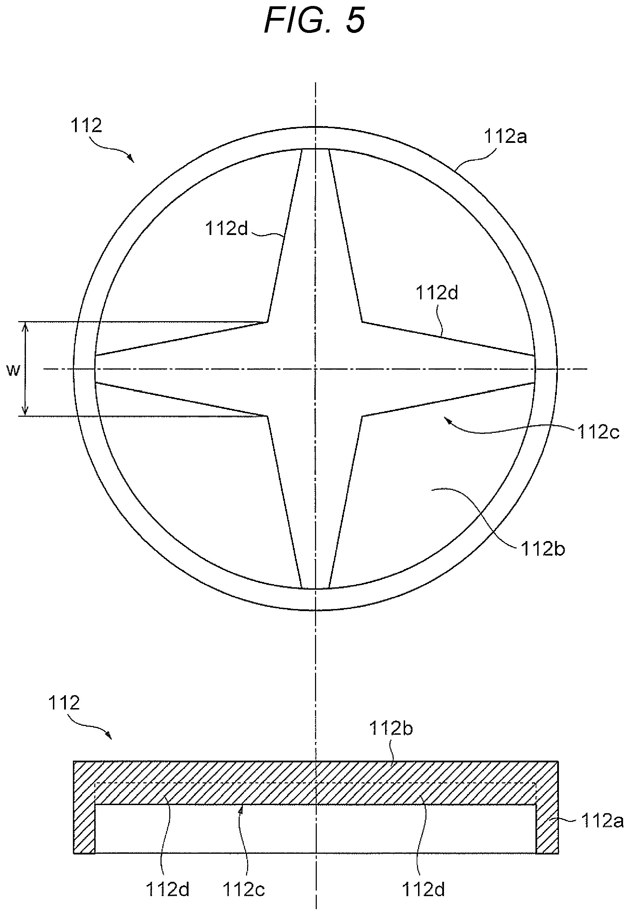

The upper view and the lower view of FIG. 5 are a bottom view and a cross-sectional view, respectively, illustrating Modification Example 3 of the cover 112 of FIG. 2. For example, the reinforcing portion 112c includes a plurality of ribs 112d arranged at equal angular intervals in the circumferential direction of the cover 112 after the cover 112 illustrated in FIG. 5 satisfies the conditions of the volume and the maximum deformation amount. Further, in each rib 112d, the width w perpendicular to the radial direction of the cover 112 gradually decreases from the central portion toward the outer edge portion of the top plate portion 112b.

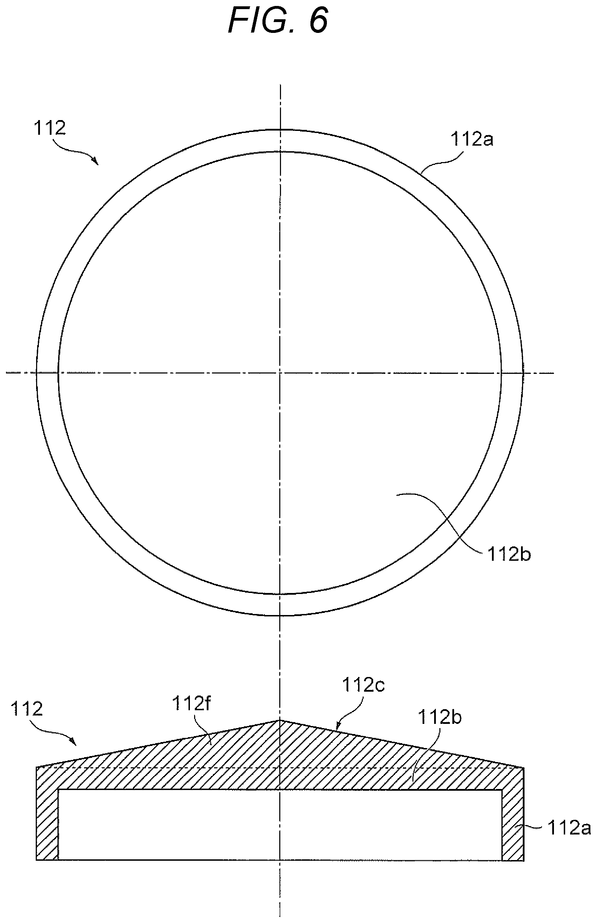

The upper view and the lower view of FIG. 6 are a bottom view and a cross-sectional view, respectively, illustrating Modification Example 4 of the cover of FIG. 2. For example, the reinforcing portion 112c includes a conical projection 112f that is concentric with the top plate portion 112b and has the upper surface of the top plate portion 112b as a bottom surface instead of the plurality of ribs 112d, after the cover 112 illustrated in FIG. 6 satisfies the conditions of the volume and the maximum deformation amount. Note that the cover 112 may include, for example, a conical projection 112f that is concentric with the top plate portion 112b and has the bottom surface of the top plate portion 112b as a bottom surface.

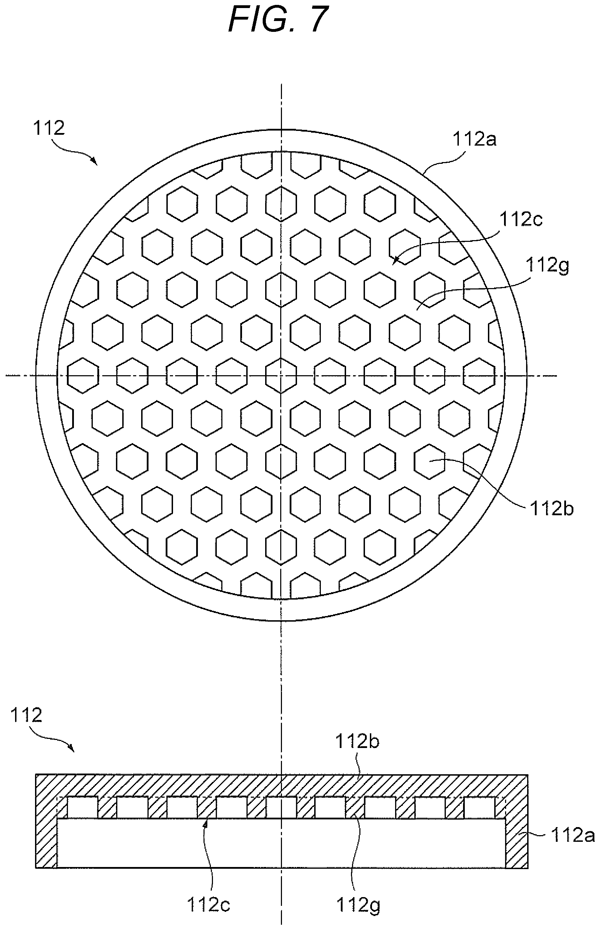

The upper view and the lower view of FIG. 7 are a bottom view and a cross-sectional view, respectively, illustrating Modification Example 5 of the cover of FIG. 2. For example, the reinforcing portion 112c includes a lattice structure 112g of a regular plane filling type instead of the plurality of ribs 112d, after the cover 112 illustrated in FIG. 7 satisfies the conditions of the volume and the maximum deformation amount. The regular plane filling shape of the lattice structure 112g of the cover 112 illustrated in FIG. 7 may be, for example, an equilateral triangle or a square in addition to a regular hexagon.

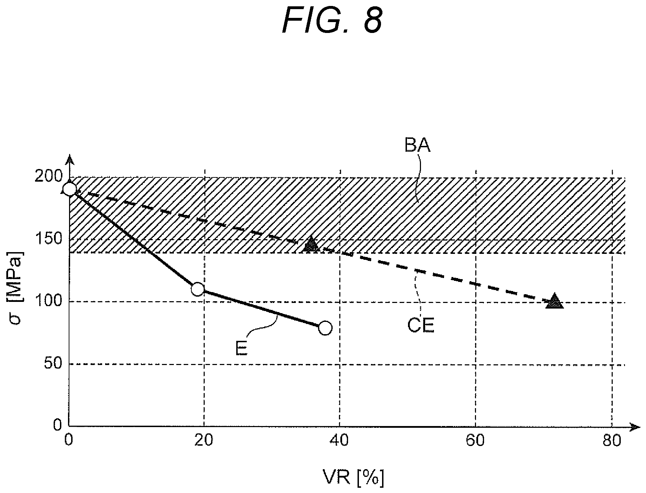

FIG. 8 is a graph illustrating a relationship between the maximum stress σ acting on the top plate portion 112b of the cover 112 in FIGS. 2 to 7 and a volume ratio VR of the cover 112 with respect to the reference cylinder or the reference column. Here, the volume of the reference cylinder or the reference cylinder is the volume of a cylinder or a column defined by the upper surface of the top plate portion 112b of the cover 112, the outer peripheral surface of the peripheral wall portion 112a, and the bottom surface of the peripheral wall portion 112a.

In addition, in the graph of FIG. 8, a hatched region BA indicates a region where the cover 112 is damaged. In addition, broken lines and black triangles indicate Comparative Example CE of the cover 112 that has the peripheral wall portion 112a and the top plate portion 112b but does not have the reinforcing portion 112c for increasing the thickness of the top plate portion 112b. Further, solid lines and white circles indicate the cover 112 according to Embodiment E in FIGS. 2 to 7.

As illustrated in FIG. 8, in Comparative Example CE in which the thickness of the top plate portion 112b is increased, when the volume ratio VR exceeds 40%, it is possible to prevent the damage of the cover 112. On the other hand, in Embodiment E in which the cover 112 has the reinforcing portion 112c, it is possible to prevent the damage of the cover 112 by setting the volume ratio VR to 15% or more. In addition, by setting the volume ratio VR to 15% or more and less than 40%, it is possible to reduce the weight of the cover 112 according to Embodiment E in FIGS. 2 to 7 as compared with the cover 112 of Comparative Example CE capable of preventing the damage.

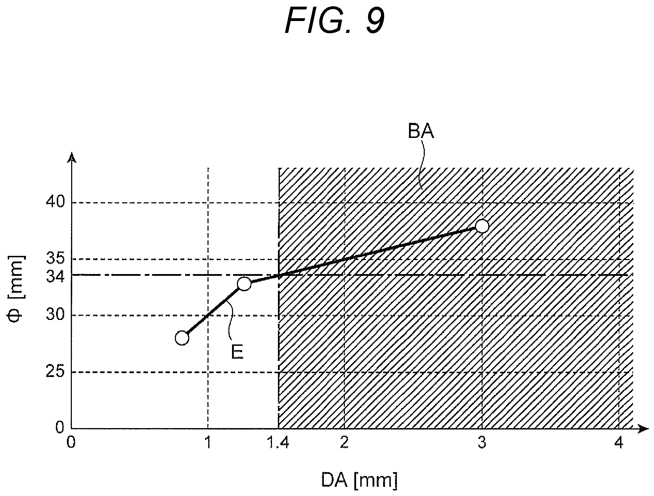

FIG. 9 is a graph illustrating a relationship between the outer diameter Φ of the cover 112 of FIGS. 2 to 7 and the maximum deformation amount DA. In the graph of FIG. 9, a hatched region BA indicates a region where the cover 112 is damaged. Here, the maximum deformation amount DA of the cover 112 is the maximum deformation amount of the top plate portion 112b of the cover 112 in the central axis direction of the peripheral wall portion 112a due to the differential pressure between the internal pressure of the internal space 111d of the case 111 sealed by the cover 112 and the air pressure of the tire T.

In addition, in FIG. 9, solid lines and white circles indicate the cover 112 according to Embodiment E in FIGS. 2 to 7. The graph of FIG. 9 indicates that, for example, when the outer diameter Φ of the cover 112 is less than 34 [mm], the maximum deformation amount DA of the top plate portion 112b of the cover 112 illustrated in FIGS. 2 to 7 becomes less than 1.4 [mm] and becomes 4.1% or less of the outer diameter Φ of the cover 112. The relationship between the outer diameter Φ of the cover 112 and the maximum deformation amount DA as described above can be derived by, for example, CAE.

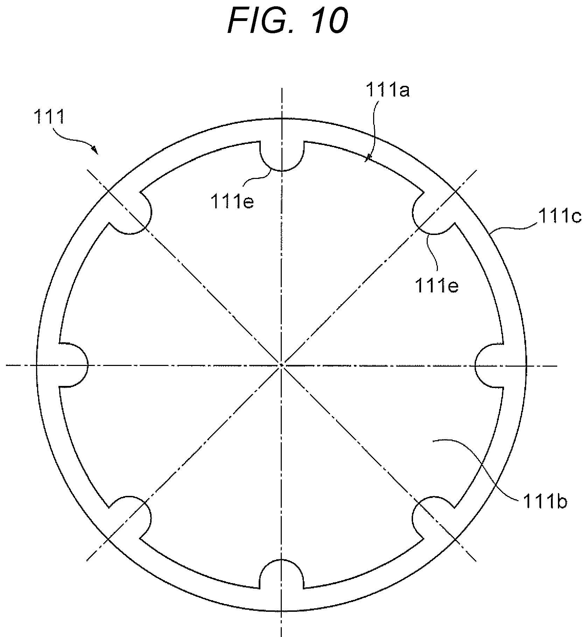

FIG. 10 is a top view illustrating a modification example of the case 111 of the housing 110 in the strain detection device 100 of FIG. 1. The case 111 illustrated in FIG. 10 includes a cylindrical portion 111c, a bottom wall 111b that closes a lower end of the case 111, and a plurality of 111e that protrude radially inward from an inner peripheral surface of the cylindrical portion 111c and support the plurality of ribs 112d of the cover 112 illustrated in FIG. 3.

For example, as illustrated in FIG. 10, the support projection 111e has a substantially semicircular shape when viewed from the central axis direction of the case 111, and extends from an opening portion 111a to the bottom wall 111b along the central axis direction of the cylindrical portion 111c of the case 111. The plurality of support projections 111e are provided at the same angular interval as the plurality of ribs 112d of the cover 112. As a result, the upper surface of each of the support projections 111e of the case 111 is in contact with an end portion of the lower surface of each of the ribs 112d of the cover 112, the end portion being adjacent to the peripheral wall portion 112a. Each of the ribs 112d of the cover 112 is supported from below by each of the support projections 111e of the case 111.

Hereinafter, the operation of the strain detection device 100 in the present embodiment will be described.

As described above, the strain detection device 100 in the present embodiment includes the case 111, the strain sensor 120, the battery 140, the circuit board 150, and the cover 112 made of resin. The case 111 is fixed to the inner peripheral surface Ti of the tire T via the elastic adhesive EA. The strain sensor 120 is attached to the outside of the bottom wall 111b of the case 111 and detects strain of the tire T via the elastic adhesive EA. The battery 140 and the circuit board 150 are accommodated in the internal space 111d of the case 111. The cover 112 closes the opening portion 111a on the side opposite to the bottom wall 111b of the case 111 to seal the internal space 111d. This cover 112 includes the peripheral wall portion 112a having a cylindrical shape, the top plate portion 112b that has a disc shape and closes the upper end of the peripheral wall portion 112a, and a reinforcing portion 112c provided protruding from the top plate portion 112b. The volume of this cover 112 is 15% or more and less than 40% of the volume of a cylinder including the upper surface of the top plate portion 112b, the outer peripheral surface of the peripheral wall portion 112a, and the bottom surface of the peripheral wall portion 112a. In addition, in the strain detection device 100, the maximum deformation amount DA of the top plate portion 112b of the cover 112 in the central axis direction of the peripheral wall portion 112a due to the differential pressure between the internal pressure of the internal space 111d of the case 111 sealed by the cover 112 and the air pressure of the tire T is 4.1% or less of the outer diameter Φ of the cover 112.

With such a configuration, in the strain detection device 100 in the present embodiment, it is possible to reinforce the cover 112 by the reinforcing portion 112c. More specifically, by providing the reinforcing portion 112c at the cover 112, it is possible to make the stress distribution uniform when the uniformly distributed load caused by the differential pressure between the internal space of the internal space 111d of the case 111 and the air pressure of the tire T acts on the cover 112. As a result, it is possible to suppress the deformation of the cover 112 due to the uniformly distributed load. In addition, since the volume of the cover 112 is 15% or more and less than 40% of the volume of the reference cylinder including the upper surface of the top plate portion 112b, the outer peripheral surface of the peripheral wall portion 112a, and the bottom surface of the peripheral wall portion 112a, it is possible to reduce the weight of the cover 112 as compared with the case where the top plate portion 112b of the cover 112 is made thick. Further, by setting the maximum deformation amount DA due to the differential pressure between the internal pressure of the internal space 111d of the case 111 and the air pressure of the tire T to 4.1% or less of the outer diameter Φ of the cover 112, it is possible to prevent damage to the center portion of the cover 112. Therefore, according to the present embodiment, it is possible to provide the strain detection device 100 capable of improving the strain detection accuracy of the tire T by suppressing the deformation of the cover 112 of the housing 110 having a sealed structure in which the circuit board 150 and the battery 140 are accommodated while suppressing an increase in the weight of the housing 110 including the case 111 and the cover 112.

In addition, in the strain detection device 100 in the present embodiment, as illustrated in FIGS. 2 to 5, the reinforcing portion 112c of the cover 112 includes a plurality of ribs 112d extending in the radial direction from the central portion toward the outer edge portion of the lower surface of the top plate portion 112b.

With such a configuration, according to the strain detection device 100 in the present embodiment, with the plurality of ribs 112d, it is possible to improve the mechanical strength of the cover 112 against the uniformly distributed load due to the differential pressure, and to suppress the deformation of the cover 112. In addition, by improving the mechanical strength of the cover 112 with the plurality of ribs 112d, a portion of the top plate portion 112b where the reinforcing portion 112c is not provided can be thinned, and thus it is possible to suppress an increase in the weight of the cover 112. Further, since the cover 112 includes three or more ribs 112d, it is possible to make the stress distribution of the cover 112 more uniform and to suppress the deformation.

In addition, in the strain detection device 100 in the present embodiment, as illustrated in FIG. 3, the reinforcing portion 112c of the cover 112 may include the columnar projection 112e concentric with the peripheral wall portion 112a provided on the lower surface of the top plate portion 112b.

With such a configuration, according to the strain detection device 100 in the present embodiment, the center portion of the top plate portion 112b of the cover 112 in which the deformation amount due to the uniformly distributed load by the differential pressure is maximized can be reinforced by the columnar projection 112e. As a result, it is possible to make the stress distribution when the uniformly distributed load acts on the cover 112 more uniform.

In addition, in the strain detection device 100 in the present embodiment, as illustrated in FIG. 4, the protruding heights h of the plurality of ribs 112d of the cover 112 gradually decrease from the center of the top plate portion 112b toward the outer edge.

With such a configuration, according to the strain detection device 100 in the present embodiment, the mechanical strength of the rib 112d against the uniformly distributed load acting on the top plate portion 112b of the cover 112 is higher at the center portion than at the peripheral edge portion of the top plate portion 112b. As a result, the center portion of the top plate portion 112b in which the deformation amount is maximized when the uniformly distributed load is applied can be reinforced by the rib 112d in which the mechanical strength is higher at the center portion than at the peripheral portion. As a result, it is possible to make the stress distribution of the cover 112 more uniform, and to more effectively suppress the deformation of the top plate portion 112b of the cover 112. In addition, since the protruding heights h of the ribs 112d gradually decrease toward the outer edge of the top plate portion 112b where the deformation amount when the uniformly distributed load is applied decreases, it is possible to reduce the weight of the reinforcing portion 112c and to suppress the increase in the weight of the cover 112.

In addition, in the strain detection device 100 in the present embodiment, as illustrated in FIG. 5, the widths w of the plurality of ribs 112d of the cover 112 perpendicular to the radial direction of the cover 112 gradually decrease from the central portion to the outer edge portion of the top plate portion 112b.

With such a configuration, according to the strain detection device 100 in the present embodiment, the mechanical strength of the rib 112d against the uniformly distributed load acting on the top plate portion 112b of the cover 112 is higher at the center portion than at the peripheral edge portion of the top plate portion 112b. As a result, the center portion of the top plate portion 112b in which the deformation amount is maximized when the uniformly distributed load is applied can be reinforced by the rib 112d in which the mechanical strength is higher at the center portion than at the peripheral portion. As a result, it is possible to make the stress distribution of the cover 112 more uniform, and to more effectively suppress the deformation of the top plate portion 112b of the cover 112. In addition, since the widths w of the ribs 112d gradually decrease toward the outer edge of the top plate portion 112b where the deformation amount when the uniformly distributed load is applied decreases, it is possible to reduce the weight of the reinforcing portion 112c and to suppress the increase in the weight of the cover 112.

In addition, in the strain detection device 100 in the present embodiment, as illustrated in FIG. 6, the reinforcing portion 112c of the cover 112 may include the conical projection 112f that is concentric with the peripheral wall portion 112a and has the upper surface of the top plate portion 112b as the bottom surface.

With such a configuration, according to the strain detection device 100 in the present embodiment, the protruding height of the conical projection 112f from the upper surface of the top plate portion 112b increases from the outer edge of the top plate portion 112b toward the center. Therefore, the mechanical strength of the conical projection 112f against the uniformly distributed load acting on the cover 112 increases from the outer edge of the top plate portion 112b toward the center. By reinforcing the top plate portion 112b of the cover 112 with such a conical projection 112f, it is possible to make the stress distribution when the uniformly distributed load acts on the cover 112 more uniform, and to more effectively suppress the deformation of the cover 112.

In addition, in the strain detection device 100 in the present embodiment, the reinforcing portion 112c of the cover 112 may include the lattice structure 112g of a regular plane filling type as illustrated in FIG. 7.

With such a configuration, according to the strain detection device 100 in the present embodiment, the top plate portion 112b of the cover 112 is reinforced by the lattice structure 112g, and thus it is possible to suppress the deformation of the cover 112. In addition, by forming the reinforcing portion 112c with the lattice structure 112g having many voids, it is possible to suppress an increase in volume of the cover 112 and to suppress the increase in the weight of the cover 112.

In addition, in the strain detection device 100 in the present embodiment, as illustrated in FIG. 10, the case 111 can include the cylindrical portion 111c, the bottom wall 111b that closes the lower end of the cylindrical portion 111c, and the plurality of support projections 111e that protrude radially inward from the inner peripheral surface of the cylindrical portion 111c and support the plurality of ribs 112d of the cover 112.

With such a configuration, according to the strain detection device 100 in the present embodiment, with each of the support projections 111e of the case 111, it is possible to support the end portion of each rib 112d adjacent to the peripheral wall portion 112a of the cover 112. As a result, it is possible to suppress the deformation of each of the ribs 112d when the uniformly distributed load acts on the cover 112 and to suppress the deformation of the cover 112. In addition, since the cylindrical portion 111c of the case 111 has higher mechanical strength against the uniformly distributed load caused by the differential pressure than the disc-shaped top plate portion 112b of the cover 112, the portion where the columnar projection 112e is not provided can be thinned, and thus it is possible to suppress the increase in weight of the case 111.

As described above, according to the present embodiment, it is possible to provide the strain detection device 100 capable of improving the strain detection accuracy of the tire T by suppressing the deformation of the cover 112 of the housing 110 having a sealed structure in which the circuit board 150 and the battery 140 are accommodated while suppressing an increase in the weight of the housing 110 including the case 111 and the cover 112.

Although the embodiment of the strain detection device according to the present disclosure has been described above, the strain detection device according to the present disclosure is not limited to the above-described embodiment, and addition, omission, replacement, and other changes of configurations can be made without departing from the gist of the present disclosure.

### Reference Signs List

100 strain detection device
111 case
111a opening portion
111b bottom wall
111c cylindrical portion
111d internal space
111e support projection
112 cover
112a peripheral wall portion
112b top plate portion
112c reinforcing portion
112d rib
112e columnar projection
112f conical projection
112g lattice structure
120 strain sensor
140 battery
150 circuit board
DA maximum deformation amount
EA elastic adhesive
T tire
Ti inner peripheral surface
w width
h protruding height
Φ outer diameter

## Claims

1. A strain detection device comprising:
a case fixed to an inner peripheral surface of a tire via an elastic adhesive;
a strain sensor that is attached to an outer side of a bottom wall of the case and detects strain of the tire via the elastic adhesive;
a circuit board and a battery that are accommodated in an internal space of the case; and
a cover that is made of resin, closes an opening portion of the case on a side opposite to the bottom wall of the case and seals the internal space,
wherein the cover includes a peripheral wall portion having a cylindrical shape, a top plate portion that has a disc shape and closes an upper end of the peripheral wall portion, and a reinforcing portion provided protruding from the top plate portion,
a volume of the cover is 15% or more and less than 40% of a volume of a cylinder including an upper surface of the top plate portion, an outer peripheral surface of the peripheral wall portion, and a bottom surface of the peripheral wall portion, and
a maximum deformation amount of the top plate portion of the cover in a central axis direction of the peripheral wall portion due to a differential pressure between an internal pressure of the internal space of the case sealed by the cover and an air pressure of the tire is 4.1% or less of an outer diameter of the cover.

2. The strain detection device according to claim 1, wherein the reinforcing portion includes a plurality of ribs extending in a radial direction from a central portion toward an outer edge portion of a lower surface of the top plate portion.

3. The strain detection device according to claim 2, wherein the reinforcing portion includes a columnar projection being concentric with the peripheral wall portion provided on the lower surface of the top plate portion.

4. The strain detection device according to claim 2, wherein protruding heights of the plurality of ribs gradually decrease from a center of the top plate portion toward an outer edge.

5. The strain detection device according to claim 2, wherein widths of the plurality of ribs perpendicular to the radial direction gradually decrease from a central portion toward an outer edge portion of the top plate portion.

6. The strain detection device according to claim 1, wherein the reinforcing portion includes a conical projection that is concentric with the peripheral wall portion and has an upper surface of the top plate portion as a bottom surface.

7. The strain detection device according to claim 1, wherein the reinforcing portion includes a lattice structure of a regular plane filling type.

8. The strain detection device according to claim 2, wherein the case includes a cylindrical portion, a bottom wall that closes a lower end of the cylindrical portion, and a plurality of support projections that protrude radially inward from an inner peripheral surface of the cylindrical portion and supports the plurality of ribs of the cover.
